# EUROPEAN PATENT APPLICATION

(11) **EP 4 711 329 A1**
(43) Date of publication of application: **18.03.2026**
(21) Application number: 24200394.5
(22) Date of filing: 13.09.2024
(51) Int. Cl.: C01B 3/38, C01B 3/48, C01B 3/50

(54) **HYDROGEN PRODUCTION PROCESS WITH CARBON DIOXIDE CAPTURE**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Dasgupta, Sayan, 60439 Frankfurt am Main (DE); Gorny, Martin, 60439 Frankfurt am Main (DE); Renou, Elise, 94503 Champigny sur Marne (FR); Leclerc, Mathieu, 94503 Champigny sur Marne (FR); Frigola, Louis, 60439 Frankfurt am Main (DE)
(74) Representative: Air Liquide

(57) **Abstract**

A process to produce hydrogen, in which a hydrocarbon-containing feedstock stream is converted to a hydrogen and carbon dioxide rich synthesis gas stream by means of autothermal reforming and water-gas shift. The shifted synthesis gas stream is subjected to a purification step, in which a hydrogen product stream, a carbon dioxide product stream, and a residual gas stream are obtained. The residual gas stream comprises a carbon containing gas component and an inert gas component. The purification step comprises a pressure swing adsorption (PSA) step, by which the hydrogen product stream is obtained, and wherein in the PSA step, slippage of an inert gas component along with the hydrogen product stream is enabled, so that the hydrogen product stream contains a measurable concentration of said inert gas component, and wherein at least a portion of the residual gas stream is supplied to the ATR step.

## Description

The invention relates to an autothermal reforming based process to produce hydrogen.

Production of Hydrogen from hydrocarbon feedstock streams is currently associated with substantial carbon dioxide emissions. It is thus imperative to reduce the carbon footprint of hydrogen production to minimize the impact of hydrogen production on the environment.

Two principles are known from industrial production processes how to capture carbon dioxide in a hydrogen production unit. According to the first principle, referred to as pre-combustion, carbon dioxide is captured before any combustion reaction takes place. One example of this principle is the carbon dioxide capture from produced synthesis gas. According to the second principle, post-combustion, the carbon dioxide is captured after a combustion reaction has taken place and before the carbon dioxide containing gas is released into the atmosphere. One example of this principle is the carbon dioxide capture from a flue gas.

Pre-combustion carbon dioxide capture can achieve an overall carbon dioxide capture of approximately 50 to 60 % with a conventional steam methane reforming (SMR) based hydrogen generation process. In autothermal reforming (ATR) based hydrogen generation processes, a high intrinsic pre-combustion carbon dioxide capture of approximately 85 to 90 % can be achieved, since the ATR process as such does not require external firing which produces larger amounts of carbon dioxide containing flue gases. With a conventional wash process based on chemical or physical absorption for shifted synthesis gas, hydrogen purities of approximately 95 to 98 % can be achieved. The rest of the carbon dioxide depleted synthesis gas composition is mainly comprised of unconverted methane from the reforming process and unconverted carbon monoxide from the water-gas shift process. Apart from this, inert gas components, mainly nitrogen and argon, are present in the hydrocarbon containing feedstock stream and thus appear in the hydrogen product gas.

In ATR based processes, a fired heater is required for pre-heating the various feedstock streams. This includes heating of the natural gas stream before it is routed to the hydrodesulfurization unit, heating of the desulfurized stream before it is routed to a pre-reforming stage, heating the pre-reformed stream before it is routed to the ATR reactor, or any combination of the aforementioned. To reduce the hydrocarbon fuel consumption in the fired heater, a split stream of the hydrogen product stream can be used for combustion in the fired heater, which reduces the carbon dioxide emissions associated with the fired heater accordingly.

Without any further purification downstream of the carbon dioxide capture (e.g. absorber) unit, unconverted methane and carbon monoxide from the synthesis gas generation process would end up in the hydrogen product which would then contribute to direct carbon dioxide emissions. By utilizing a hydrogen purification step installed downstream of the carbon capture unit to minimize carbon containing impurities, a residual gas (e.g. tail-gas of a pressure swing adsorption unit) is produced which contains hydrogen, unconverted hydrocarbon, carbon monoxide and inert gases such as nitrogen and argon. This residual gas can be utilized as fuel in the fired heater, or it can be compressed and supplied to the synthesis gas generation section.

The recirculation of the residual gas to the synthesis gas generation section induces the recycling of inert gases to the feed gas of the autothermal reformer. This is particularly relevant in cases where the hydrogen purification step results in a residual gas with high inert gas concentration, or in cases where the feedstock gas comprises high inert gas components from the outset. For instance, in the case of cryogenic based carbon dioxide separation processes used for the purification of shifted synthesis gas streams to obtain pure hydrogen, nearly all inert gas components end up in the residual gas stream.

The recirculation of inert gas components has the following negative effect, if not controlled. The inert gas components will build up in the recirculation loop over time, as inert gas components are unable to react. This can limit the flow rate of the hydrocarbon feedstock to the autothermal reformer, since the partial flow rate of inert gases is too high, thus reducing the flow rate of the produced hydrogen.

In order to limit such a build-up, a part of the residual gas stream may continuously be sent to the fired heater, acting as a de-concentration stream. According to this configuration, the inert gas components will exit the recirculation loop and will be routed via the fired heater to the atmosphere. However, this solution has the following disadvantage. The residual gas stream may still comprise carbon dioxide and further combustible carbon compounds (methane, carbon monoxide) which end up as carbon dioxide in the flue gas of the fired heater. This carbon dioxide will not be captured in case the residual gas stream is combusted in the fired heater. The effect of the carbon monoxide is especially harmful, as it results in higher carbon intensity per unit energy release than combustion of methane.

The aforementioned disadvantage can be compensated by a higher ratio of hydrogen combustion in the fired heater, partially replacing hydrocarbon combustion. Therefore, hydrogen has to be withdrawn from the hydrogen product stream. To compensate for this loss of production, the full plant capacity has to be increased. This has a negative impact on energy and feedstock consumption and thus capital and operational expenditures (capex and opex) of the concerned plant.

Furthermore, the de-concentration stream principle induces that the inert gas components concentration in the loop increases until an equilibrium state is reached, where the inert gas injection in the loop is compensated by the extraction flow rate to the fired heater. The higher this extraction flow rate, the lower the concentration of inert gas components in the loop. Hence, there is a trade-off between a higher extraction flow rate to the fired heater, and a high concentration of inert gas in the recirculation loop, both associated with the aforementioned disadvantage.

There is hence a need to improve existing processes for ATR-based hydrogen production in order to at least partially overcome the aforementioned disadvantages.

In general, at least one of the underlying problems is at least partially solved by a process to produce hydrogen, comprising the process steps of
(a) Providing a hydrocarbon-containing feedstock stream;
(b) Converting the hydrocarbon-containing feedstock stream to a first synthesis gas stream by means of an autothermal reforming (ATR) step, wherein the first synthesis gas stream comprises hydrogen, carbon monoxide, carbon dioxide and an inert gas component;
(c) Converting the first synthesis gas stream to a second synthesis gas stream by means of a water-gas shift step, wherein the second synthesis gas stream is depleted in carbon monoxide and enriched in hydrogen and carbon dioxide compared to the first synthesis gas stream, and wherein the second synthesis gas stream comprises the inert gas component;
(d) Subjecting the second synthesis gas stream to a purification step, in which a hydrogen product stream, a carbon dioxide product stream, and a residual gas stream are obtained, wherein
   the residual gas stream comprises a combustible carbon containing gas component and a portion of the inert gas component, and wherein the purification step comprises a pressure swing adsorption (PSA) step, by which the hydrogen product stream is obtained, and wherein in the PSA step, slippage of a portion of the inert gas component along with the hydrogen product stream is enabled, so that the hydrogen product stream contains a measurable concentration of the inert gas component;
(e) Supplying at least a portion of the residual gas stream to the ATR step according to process step (b).

According to the invention, slippage of an inert gas component along with the hydrogen product stream is enabled, so that the hydrogen product stream contains a measurable concentration of said inert gas component. That is, the product quality of the hydrogen product stream is intentionally reduced in the sense that a certain concentration of inert gas is allowed in the hydrogen product stream. This results in the surprising technical effect that an inert gas concentration in the residual gas stream is significantly more reduced in proportion to an increase of the inert gas concentration in the hydrogen product stream. Due to the reduced inert gas concentration in the residual gas stream, the concentration of combustible carbon containing gas components increases in the residual gas stream. Thus, a larger portion of the residual gas stream or even the entire residual gas stream can be recycled to the ATR step as defined in process step (e). This has the further advantage that the portion of the residual gas stream supplied to a fired heater for combustion can be reduced or even omitted.

Hence, according to the invention, the design of the pressure swing adsorption (PSA) based hydrogen purification process is modified compared to known processes in order to allow a part of the inert gases in the hydrogen product. To enable slippage of inert gases in the PSA process, the selection of adsorbents and the applied phase times (cycle times) used in the PSA process are adapted accordingly. Due to the different isotherms of adsorption between inert gases such as Argon and Nitrogen on the one side, and carbon dioxide, carbon monoxide and methane on the other side, inert gases such as nitrogen and argon can be easily and preferably evacuated with hydrogen from the PSA adsorption bed. This is mainly due to the fact that inert gases such as nitrogen and argon have no electric dipole moment, just like hydrogen. In contrast, all aforementioned carbon-containing gas components involved in the process are more or less polar, i.e. have an electric dipole moment that is significantly different from zero.

In the purification step as defined according to process step (d), also a carbon dioxide product stream is obtained. This carbon dioxide product stream is preferably obtained either by an absorption and subsequent desorption process involving a physical or chemical acting absorption medium, or by cryogenic carbon dioxide separation involving at least one compression and at least one condensation step.

The PSA step as defined in process step (d) is designed so that the hydrogen product stream contains a measurable concentration of the inert gas component. The term "measurable concentration" means that the inert gas component has a concentration which is at least in the ppm range (part per million range, either in relation to the mass or the volume of the respective sample). Preferably, this means that the concentration of the inert gas component in the hydrogen product stream, in particular the concentration of the inert gas component in a sample of the hydrogen product stream, is at least 1 ppm, or at least 2 ppm, or at least 5 ppm, or at least 10 ppm, or at least 25 ppm, or at least 50 ppm, or at least 100 ppm, or at least 250 ppm, or at least 500 ppm, or at least 1000 ppm.

In the context of the invention, "enabling slippage of a component" means that said component, in particular the inert gas component, is not or is not totally adsorbed to the adsorbent bed of the PSA device, as is the case for hydrogen of the hydrogen product stream.

The "inert gas component" is particularly a gas compound (or an atom in the case of noble gases) or mixture of gas compounds which does not undergo a chemical reaction with other components under the prevailing process conditions, in particular under autothermal reforming and/or water gas shift conditions.

According to step (e), at least a portion, preferably a portion, of the residual gas stream is supplied to the ATR step (b). That is, the residual gas stream or a portion thereof is used in the ATR step (b) as a part of the feedstock.

According to one example, the hydrocarbon containing feedstock stream is a natural gas stream. Preferably, the main component of said stream is methane. Before subjecting it to step (b), the hydrocarbon-containing feedstock stream may be subjected to a desulfurization step, for instance in a hydrodesulfurization (HDS) unit. Before subjecting it to step (b), the hydrocarbon-containing feedstock stream may further be subjected to a pre-reforming step, for instance in a pre-reformer unit, to increase the concentration of methane in the hydrocarbon-containing feedstock stream.

The ATR step according to (b) comprises, as per definition of an ATR process, a hydrocarbon partial oxidation reaction followed by catalytic reforming of the hydrocarbon with steam added to the process. Oxidation agent is preferably oxygen. The first synthesis gas thereby produced comprises at least hydrogen, carbon monoxide and carbon dioxide. Usually, the synthesis gas also comprises unconverted hydrocarbons and side products of the reaction. The ATR step is performed in an ATR reactor.

According to the water-gas shift step according to (c), the first synthesis gas is reacted with steam to increase the hydrogen concentration in the product gas mixture. According to the water-gas shift reaction, carbon monoxide reacts with water (steam) to afford carbon dioxide and hydrogen. Therefore, the second synthesis gas stream is depleted in carbon monoxide and enriched in hydrogen and carbon dioxide compared to the first synthesis gas stream. The water-gas shift step may comprise use of one or a plurality of water-gas shift reactors or converters, arranged downstream of the ATR reactor. The plurality of water-gas shift converters may comprise at least one high temperature shift converter (HTSC) and at least one low temperature shift converter (LTSC) arranged downstream of the HTSC.

According to a preferred embodiment of the invention, a portion of the residual gas stream is supplied to a fired heater for combustion to provide heat for the process.

Additionally, a hydrocarbon fuel stream and/or hydrogen fuel stream may be supplied to the fired heater. The "or" case is preferred, whereas hydrogen is preferred. According to an example, the hydrocarbon fuel stream is a partial stream of the hydrocarbon-containing feedstock stream. According to a further example, the hydrogen fuel stream is a partial stream of the hydrogen product stream.

The heat supplied by the fired heater may be utilized for at least one of
- pre-heating the hydrocarbon feedstock stream before it is subjected to the ATR step,
- pre-heating the hydrocarbon feedstock stream before it is supplied to a Hydrodesulfurization (HDS) step, which optionally forms a part of the process to produce hydrogen, and
- pre-heating the hydrocarbon feedstock stream before it is supplied to a pre-reforming step, which optionally forms a part of the process to produce hydrogen.

According to one embodiment, the carbon dioxide product stream obtained in the process may have a purity of more than 99 % by volume, or of more than 99.5 % by volume, or of more than 99.9 % by volume.

According to a preferred embodiment of the process, the inert gas component comprises a gas component which has an electric dipole moment of zero. Examples of such inert gas components are noble gases and nitrogen.

According to a preferred embodiment of the process, the inert gas component comprises nitrogen and/or argon. The "and" case is preferred.

The inert gas component can originate from the hydrocarbon containing feedstock stream, for example, the feedstock stream can contain nitrogen. The inert gas component can also originate from the oxidising agent used in the ATR step for partial oxidation. For example, nitrogen and argon can be introduced into the ATR reactor from air, or argon that has not been completely removed from an oxygen source can be introduced into the reactor.

According to a preferred embodiment of the process, the combustible carbon containing gas component comprises methane and/or carbon monoxide. The "and" case is preferred.

According to a preferred embodiment of the process, a proportion of at least 10 wt.-% of the inert gas component of the second synthesis gas stream is transferred to the hydrogen product stream, or a proportion of at least 30 wt.-%, or of at least 50 wt.-%, or of at least 80 wt.-%, preferably a proportion of 30 wt.-% to 80 wt.-%, more preferred 30 wt.-% to 50 wt.-%.

The slippage of the inert gas component in the pressure swing adsorption step is thus preferably adjusted in such a way that preferably the above-mentioned proportions of inert gas of the second synthesis gas stream are subsequently recovered in the hydrogen product stream. In this context, inert gas components are preferably understood to be the sum of nitrogen and argon.

According to a preferred embodiment of the process, the concentration of hydrogen in the hydrogen product stream is at least 95 wt.-%, or is at least 97 wt.-%, or is at least 99 wt.-%.

According to a preferred embodiment of the process in the PSA step, slippage of the inert gas component and of a carbon containing gas component along with the hydrogen product stream is enabled, and wherein the ratio of the inert gas component to the carbon containing gas component in the hydrogen product stream is higher than the ratio of the inert gas component to the combustible carbon containing gas component in the residual gas stream.

In this context, the carbon containing gas component in the hydrogen product stream has to be distinguished from the combustible carbon containing gas component of the residual gas stream obtained in the same step (d) of the process. In particular, the combustible carbon containing gas component in the residual gas stream may comprise carbon dioxide only in minor amounts, whereas the carbon containing gas component in the hydrogen product stream may comprise carbon dioxide as the main component.

Hence, the carbon containing gas component of the hydrogen product stream preferably comprises carbon dioxide. In this case, the hydrogen product stream comprises hydrogen, the inert gas component and carbon dioxide.

According to this embodiment, the PSA step is set so that also slippage of a carbon containing gas component is enabled, so that the hydrogen product stream comprises at least hydrogen, the inert gas component, and said carbon containing gas component. In particular with increasing inert gas component concentrations in the hydrogen product stream, in other words higher inert gas slippage, also carbon containing gas components are found in the hydrogen product gas as a result of limited selectivity of the PSA step. However, is was surprisingly found that the ratio of the inert gas component to the carbon containing gas component in the hydrogen product stream is higher than the ratio of the inert gas component to the combustible carbon containing gas component in the residual gas stream. In other words, carbon containing compounds will be more concentrated in the residual gas stream than in the hydrogen product stream. In turn, the inert gas component will be more concentrated in the hydrogen product stream and less concentrated in the residual gas stream. Hence, a larger amount of the residual gas stream can be recycled to the ATR step and less or no residual gas has to be withdrawn from the recycle and supplied to a fired heater, for instance.

According to the aforementioned embodiment of the process, in the PSA step, slippage of an inert gas component and of a carbon containing gas component along with the hydrogen product stream is enabled, so that the hydrogen product stream further contains a measurable concentration of said carbon containing gas component. The term "measurable concentration" means that the carbon containing gas component in the hydrogen product stream has a concentration which is at least in the ppm range (part per million range, either in relation to the mass or the volume of the respective sample). Preferably, this means that the concentration of the carbon containing gas component in the hydrogen product stream, in particular the concentration of the carbon containing gas component in a sample of the hydrogen product stream, is at least 1 ppm, or at least 2 ppm, or at least 5 ppm, or at least 10 ppm, or at least 25 ppm, or at least 50 ppm, or at least 100 ppm, or at least 250 ppm, or at least 500 ppm, or at least 1000 ppm.

According to a preferred embodiment of the process, in the purification step (d), the second synthesis gas stream is subjected to the pressure swing adsorption (PSA) step to obtain the hydrogen product stream and an off-gas gas stream, and wherein the off-gas stream is subjected to a cryogenic carbon dioxide separation step, which comprises at least one carbon dioxide compression and one carbon dioxide condensation step, to obtain the carbon dioxide product stream and the residual gas stream.

According to this embodiment of the process, hydrogen is separated from the second synthesis gas stream by means of the pressure swing adsorption (PSA) step, which is performed in a PSA unit. Thereby, the hydrogen product stream containing the inert gas component is obtained. The PSA off-gas also obtained therein may be compressed, dried, further compressed and then cooled down to a low temperature to separate carbon dioxide through condensation. The condensed carbon dioxide may be subjected to a cryogenic distillation process to obtain the carbon dioxide product stream. Non-condensable gas components obtained therein may form the residual gas stream.

The process according to the invention is particularly preferred when the carbon dioxide product stream is generated by means of cryogenic carbon dioxide separation. In such a process, the inert gas components comprised in the second synthesis gas stream are due to very high separation, which means that nearly the entire content of inert gases would end in the residual gas stream. In such a case, it is therefore preferable to reduce the amount of inert gases in the residual gas stream by means of the upstream PSA separation (slippage along with Hydrogen), so that as much of the residual gas stream as possible can still be supplied to the ATR step.

Further preferred, in the cryogenic carbon dioxide separation step, a stream of non-condensable gas components is obtained, which is subjected to a membrane based hydrogen separation step, whereby the residual gas stream and a hydrogen-rich stream are obtained.

By adding a membrane based hydrogen separation step to the cryogenic carbon dioxide separation step, hydrogen is recovered and will not end in the residual gas stream. In the membrane based hydrogen separation step, the hydrogen-rich stream is preferably the permeate. The combustible carbon containing gas components, in particular comprising carbon monoxide and/or methane, are found in the retentate, which forms the residual gas stream. The recovered hydrogen-rich stream may be supplied to the PSA step as defined in process step (d).

Hence, according to one further preferred embodiment of the process, the hydrogen-rich stream is supplied to the second synthesis gas stream obtained according to process step (c).

According to a preferred embodiment of the process, in the purification step (d), the second synthesis gas stream is subjected to a solvent based carbon dioxide absorption and subsequent desorption step, whereby the carbon dioxide product stream and a carbon dioxide depleted second synthesis gas stream are obtained, and wherein the carbon dioxide depleted synthesis gas stream is subjected to the pressure swing adsorption (PSA) step, whereby the hydrogen product stream and the residual gas stream are obtained.

According to this alternative process scheme, the carbon dioxide is first removed from the second synthesis gas stream, and the resulting carbon dioxide depleted stream, mainly comprising hydrogen, is subjected to the PSA step as defined in process step (d). The off-gas stream of the PSA unit performing the PSA step then forms the residual gas stream. Here, carbon dioxide is removed first from the second synthesis gas stream by means of physical or chemical absorption by means of a solvent, whereby a carbon dioxide depleted second synthesis gas stream is obtained. The carbon dioxide product stream is obtained by desorption from the solvent. The solvent may also referred to as scrubbing agent or absorption agent. The hydrogen product stream is obtained in the subsequent PSA step, to which the carbon dioxide depleted second synthesis gas stream is subjected. The off-gas of the PSA process thereby forms the residual gas stream.

For the aforementioned embodiment, physical absorption or chemical absorption may be utilized. Physical absorption is preferred.

Examples for physical absorption solvents are Methanol, N-Methyl-2-pyrrolidone (NMP), a mixture of dimethyl ethers of Polyethylene glycol, and Propylene carbonate (4-Methyl-1,3-dioxolan-2-one). Methanol is preferred.

Preferred chemical absorption solvents are amines, in particular
- primary amines, for example monoethanolamine (MEA), aminomethylpropanol (AMP)
- secondary amines, for example ethylenediamine (EDA), piperazine (PZ), butylethanolamine (BEA), diethanolamine (DEA),
- tertiary amines, for example methyldiethanolamine (MDEA), 3-Dimetyl-1-Aminomethypropanol (3DMA1P), triethylendiamine (TEDA), diethylamino-2-butanol (DEAB), 3-(Diethylamino)propylamine (DEAPA).

According to a preferred embodiment, the process further comprises measuring the partial flow rate of the inert gas component in the hydrogen product stream by means of an analyser, and based on said measured partial flow rate of the inert gas component, adjusting a phase time of the pressure swing adsorption (PSA) step to adapt the concentration of the inert gas component in the hydrogen product stream.

This measure allows adapting the phase time of the PSA step to adjust the inert gas component concentration in the hydrogen product stream whilst still minimizing the concentration of carbon containing gas components in the hydrogen product stream.

According to a further preferred embodiment, the process further comprises measuring the partial flow rate of the inert gas component in the hydrogen product stream by means of an analyser, and based on said measured partial flow rate, adjusting the flow rate of the residual gas stream supplied to a fired heater, and optionally adjusting a flow rate of the hydrogen product gas stream supplied to said fired heater.

If the partial flow rate of the inert gas component in the hydrogen product stream deviates from a given threshold estimated by calculations, the control system of the plant can trigger the increase or decrease of a flow rate of the residual gas stream supplied to the fired heater, which in turn triggers the increase or decrease of the flow rate of the residual gas stream supplied to the ATR step. In order to provide the fired heater duty requirement, the change of the flow rate of the residual gas stream supplied to the fire heater is compensated by firing either more or less hydrocarbon or hydrogen based fuel, wherein the latter can be branched off from the hydrogen product stream.

Optionally, also the partial flow rate of a carbon containing gas component in the hydrogen product stream is measured by means of the analyser, in particular the partial flow rate of at least one element from the group comprising
- carbon monoxide,
- carbon dioxide and
- methane
is measured by means of the analyser.

As an optional measure, also the partial flow rate of a carbon containing gas component or multiple carbon containing gas components in the hydrogen product stream may be determined by means of the analyser.

As a further optional measure, also the partial flow rate of inert gas components in the residual gas stream may be determined by means of the analyser.

These additional optional measurements allow a more precise adjusting of the phase time of the pressure swing adsorption (PSA) step for a more precise adapting of the concentration of the inert gas component in the hydrogen product stream.

These additional optional measurements further allow a more precise adjusting of the flow rate of the residual gas stream supplied to the fired heater, and optionally a more precise adjusting of the flow rate of the hydrogen product gas stream supplied to said fired heater.

According to a further preferred embodiment, the concentration of the inert gas component in the hydrogen product steam is at least 2000 ppm, preferably the concentration of the sum of nitrogen and argon in the hydrogen product stream is at least 2000 ppm. In further embodiments, the concentration of the inert gas component or the sum of nitrogen and argon in the hydrogen product stream is at least 3000 ppm, or at least 4000 ppm, or at least 5000 ppm, or at least 6000 ppm, or at least 7500 ppm, or at least 10000 ppm. Preferably, the concentration of the inert gas component or the sum of nitrogen and argon in the hydrogen product stream is from 1000 to 10000 ppm, preferably from 2000 to 10000 ppm, more preferred 2500 to 7500 ppm.

The invention will now be detailed by way of an exemplary embodiment and numerical example with reference to the attached drawing.

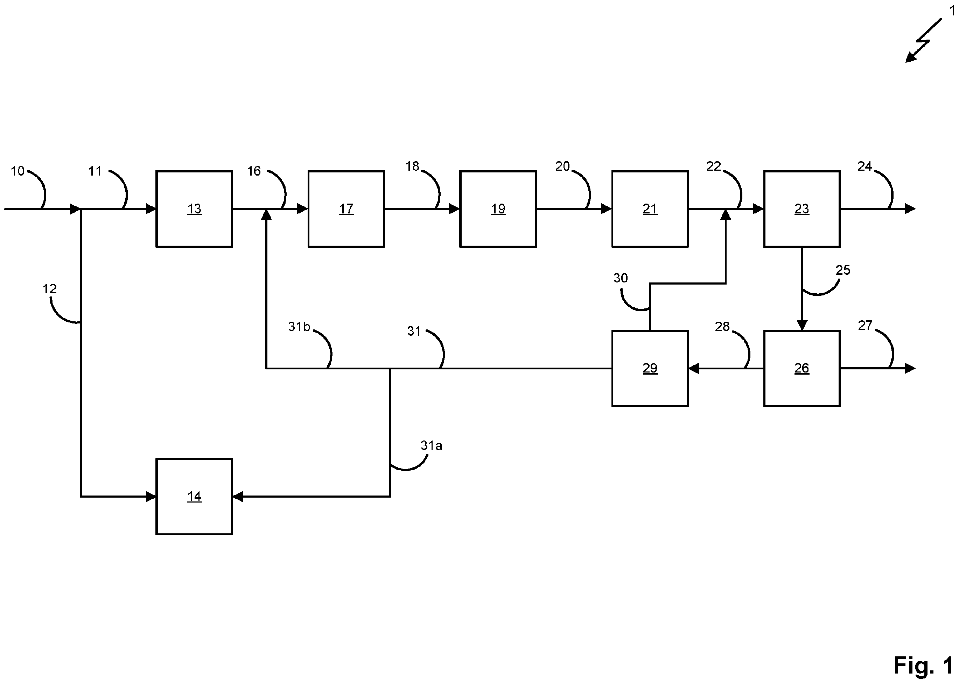

- Figure 1: depicts a flow diagram of an exemplary embodiment of the process according to the invention.

According to the process scheme depicted in Figure 1, which represents one exemplary embodiment of the process according to the invention, a combined fuel and feedstock stream 10, which was desulfurized in an upstream process in a HDS unit (not shown), is divided into a feedstock stream 11 and a fuel stream 12. The streams 10, 11 and 12 comprise light hydrocarbons with methane as the main component. The feedstock stream 11 is subjected to a pre-reforming step in a pre-reformer 13, in which the methane content of the feedstock stream 11 is increased.

The resulting pre-reformed feedstock stream 16 is combined with a steam stream (not shown) and subjected to an autothermal reforming (ATR) step in an ATR reactor 17 to obtain a first synthesis gas stream 18. In the ATR reactor, mainly methane, water (steam) and oxygen are converted to the first synthesis gas stream 18, which comprises hydrogen, carbon monoxide and carbon dioxide as the main products and some unconverted methane. The oxygen for the exothermal partial oxidation part of the ATR process is provided by means of an air separation unit (ASU, not shown).

The first synthesis gas stream 18 is cooled down in a waste heat recovery unit 19, by which steam is generated in the waste heat recovery unit for internal use in the process and optionally for providing export steam (steam stream not shown). The cooled-down first synthesis gas stream 20 is then subjected to a water-gas shift step in a water-gas shift unit 21.

In said water-gas shift unit 21, mainly carbon monoxide contained in the first synthesis gas stream is converted with water (steam) to afford hydrogen and carbon dioxide. In other words, in the first synthesis gas stream, the hydrogen content and the carbon dioxide is increased, whereas the carbon monoxide content is decreased. The water-gas shift unit 21 may comprise a high temperature shift converter (HTSC) and a low temperature shift converter (LTSC), wherein the LTSC is arranged downstream of and in fluid connection with the HTSC. The resulting second synthesis gas stream 22, depleted in carbon monoxide and enriched in hydrogen and carbon dioxide, is subjected to hydrogen separation in a pressure swing adsorption (PSA) step in a PSA unit 23.

In the pressure swing adsorption step in the PSA unit 23, slippage of inert gas components and optionally of carbon containing gas components is enabled. In other words, just like hydrogen, a portion of the gas components of the shifted second synthesis gas stream 22 are not totally adsorbed to the adsorbent bed of the PSA unit. This can be achieved by setting the phase time of the PSA unit and choosing the appropriate solid adsorbent material accordingly. According to the example of Figure 1, in particular slippage of Nitrogen, Argon and carbon dioxide is enabled in the PSA unit. A hydrogen product stream 24 containing nitrogen, argon and carbon dioxide is thus discharged from the PSA unit. This stream 24 can be further processed to obtain a pure Hydrogen stream (further processing not shown).

The off-gas stream 25 of the PSA unit 23, often also referred to as tail-gas stream, is also discharged from the PSA unit 23 and introduced into a cryogenic carbon dioxide separation unit 26. In said cryogenic carbon dioxide separation unit, the off-gas stream 25 is subjected to multiple compression and cooling steps to obtain a liquid stream mainly comprising carbon dioxide. This liquid stream is subjected to a cryogenic separation, whereby a pure carbon dioxide stream 27 is obtained. Non condensable gas components are withdrawn from the cryogenic carbon dioxide separation unit 26 as a stream of non-condensable gas components 28. Said stream 28 comprises inert gas components, mainly nitrogen and argon, combustible carbon containing gas components such as carbon monoxide and methane, carbon dioxide and hydrogen. Due to the high hydrogen content of stream 28, it is subjected to a further membrane based separation step in a membrane separation unit 29. In the membrane separation unit 29, a hydrogen-rich stream 30 is obtained as permeate stream. This permeate stream may also comprise carbon dioxide. Furthermore, a residual gas stream 31 mainly comprising the inert gas components, methane and carbon monoxide is obtained as the permeate stream.

Due to the fact that slippage of inert gas components is enabled in the pressure swing adsorption step performed by the PSA unit 23, the concentration of the inert gas components in the residual gas stream 31 is significantly lower than it would be the case without enabling slippage of inert gas components in the PSA unit 23. A portion of the residual gas stream 31, here referred to as substream 31b, is recycled to the pre-reformed feedstock stream 16 and converted in the ATR reactor together with said stream. A further substream 31a of the residual gas stream 31 is supplied to a fired heater 14 which supplies heat to the process (not shown). The fired heater is also supplied with a fuel stream 12 containing hydrocarbons, which is a substream of the combined feedstock and fuel stream 10. Additionally or as an alternative, the fired heater 14 may also be fed with a portion of the hydrogen product stream 24.

Due to the low content of inert gas components in the residual gas stream 31 according to the invention, a significantly smaller portion has to be branched off from stream 31 as stream 31a for firing in the fired heater.

In the following table, two examples according to the invention are presented based on simulation results. According to example 1, a lower slippage of inert gas components along with the hydrogen product stream is enabled in comparison to example 2. According to example 1, the content of carbon containing gas components in the hydrogen product stream is thus minimized. This is indicated in the table by the respective carbon dioxide concentration. According to example 2, an increased slippage of inert gas components in the PSA unit 23 along with hydrogen is enabled. Since the selectivity of adsorbents utilized in the PSA process are limited, also carbon dioxide is partly not adsorbed in the adsorbent bed and thus also found in the hydrogen product stream in non-negligible quantities according to example 2. More precisely, according to example 2, the slippage of inert gas components is enabled so that 600 ppm of carbon dioxide is allowed in the hydrogen product stream.

| | | **Example 1** | **Example 2** |
|---|---|---|---|
| | | 2 ppm CO₂ in H₂ product stream | 600 ppm CO₂ in H₂ product stream |
| Sum of argon and nitrogen sent to hydrogen product stream 24 | kmol/h | 16.3 | 81.3 |
| Carbon dioxide sent to hydrogen product stream 24 | kmol/h | 0.02 | 7.31 |
| Concentration of carbon dioxide in the hydrogen product stream 24 | ppm | 2 | 600 |
| Sum of carbon atoms sent to hydrogen product stream 24 | kmol/h | 0.1 | 33.0 |
| Concentration of carbon atoms in the hydrogen product stream 24 | ppm | 10 | 2711 |
| Concentration of argon and nitrogen in the hydrogen product stream 24 | ppm | 1630 | 6673 |
| Sum of argon and nitrogen in the residual gas stream 31 | kmol/h | 188.0 | 62.7 |
| Concentration of argon and nitrogen in the residual gas stream 31 | mol-% | 55.6 | 27.0 |
| Total recycle stream (residual gas substream 31b) | kmol/h | 338.3 | 232.6 |
| Total off-gas as fuel stream (residual gas substream 31a) | kmol/h | 483.2 | 290.8 |
| Total residual gas stream 31 | kmol/h | 821.5 | 523.4 |
| Ratio of flows of stream 31a / 31 | % | **58.8** | **55.6** |
| Total feedstock and fuel gas stream 10 | kmol/h | 4306 | 4311 |
| Total electricity consumption of cryogenic carbon dioxide separation unit 26 | kWh/h | 40073 | 38047 |

By allowing a higher argon and nitrogen molar flow in the hydrogen product stream, the concentration of inert gas components is significantly reduced in the recycle stream 31 accordingly (by comparison of example 1 and 2). As a consequence, the concentration of combustible gas components in the recycle stream 31 is increased in example 2. Furthermore, the share of the flow rate of the stream sent to the fired heater is reduced from 58.8 to 55.6 %. Hence, the share of the flow rate of the stream recycled to the ATR 17 is increased accordingly. Since the process is looping, this difference implies a significant difference of absolute flow to the fired heater. This flow is reduced from 483.2 kmol/h to 290.8 kmol/h due to the higher concentration of combustible carbon gas components of stream 31a. The examples thus also show, that by enabling and in particular increasing the slippage of inert gas components in the PSA step along with the hydrogen product stream, the flow rate of the partial stream routed to the fired heater can be reduced.

### List of reference signs

- 1: Process
- 10: Combined fuel and feedstock stream
- 11: Feedstock stream
- 12: Fuel stream
- 13: Pre-reformer
- 14: Fired heater with boiler
- 15: Carbon dioxide containing flue gas stream
- 16: Pre-reformed feedstock stream
- 17: ATR reactor
- 18: First synthesis gas stream
- 19: Waste heat recovery unit
- 20: Cooled first synthesis gas stream
- 21: Water-gas shift unit
- 22: Second synthesis gas stream
- 23: PSA unit
- 24: Hydrogen product stream with inert gas components
- 25: PSA off-gas stream
- 26: Cryogenic carbon dioxide separation unit
- 27: Carbon dioxide product stream
- 28: Stream of non-condensable gas components
- 29: Membrane separation unit
- 30: Hydrogen-rich stream
- 31: Residual gas stream
- 31a: Residual gas substream to fired heater
- 31b: Residual gas substream for recycle to ATR reactor

## Claims

1. A process to produce hydrogen, comprising the process steps of
(a) Providing a hydrocarbon-containing feedstock stream;
(b) Converting the hydrocarbon-containing feedstock stream to a first synthesis gas stream by means of an autothermal reforming (ATR) step, wherein the first synthesis gas stream comprises hydrogen, carbon monoxide, carbon dioxide and an inert gas component;
(c) Converting the first synthesis gas stream to a second synthesis gas stream by means of a water-gas shift step, wherein the second synthesis gas stream is depleted in carbon monoxide and enriched in hydrogen and carbon dioxide compared to the first synthesis gas stream, and wherein the second synthesis gas stream comprises the inert gas component;
(d) Subjecting the second synthesis gas stream to a purification step, in which a hydrogen product stream, a carbon dioxide product stream, and a residual gas stream are obtained, wherein
the residual gas stream comprises a combustible carbon containing gas component and a portion of the inert gas component, and wherein
the purification step comprises a pressure swing adsorption (PSA) step, by which the hydrogen product stream is obtained, and wherein
in the PSA step, slippage of a portion of the inert gas component along with the hydrogen product stream is enabled, so that the hydrogen product stream contains a measurable concentration of the inert gas component;
(e) Supplying at least a portion of the residual gas stream to the ATR step according to process step (b).

2. The process according to claim 1, wherein a portion of the residual gas stream is supplied to a fired heater for combustion to provide heat for the process.

3. The process according to any of the preceding claims, wherein the inert gas component comprises Nitrogen and/or Argon.

4. The process according to any of the preceding claims, wherein the combustible gas component comprises methane and/or carbon monoxide.

5. The process according to any of the preceding claims, wherein a proportion of at least 10 wt.-% of the inert gas component of the second synthesis gas stream is transferred to the hydrogen product stream, or a proportion of at least 30 wt.-%, or of at least 50 wt.-%, or of at least 80 wt.-%, preferably a proportion of 30 wt.-% to 80 wt.-%, more preferred 30 wt.-% to 50 wt.-%.

6. The process according to any of the preceding claims, wherein the concentration of hydrogen in the hydrogen product stream is at least 95 wt.-%, or is at least 97 wt.-%, or is at least 99 wt.-% .

7. The process according to any of the preceding claims, wherein in the PSA step, slippage of the inert gas component and of a carbon containing gas component along with the hydrogen product stream is enabled, and wherein the ratio of the inert gas component to the carbon containing gas component in the hydrogen product stream is higher than the ratio of the inert gas component to the combustible carbon containing gas component in the residual gas stream.

8. The process according to any of the preceding claims, wherein in the purification step (d), the second synthesis gas stream is subjected to the pressure swing adsorption (PSA) step to obtain the hydrogen product stream and an off-gas gas stream, and wherein the off-gas stream is subjected to a cryogenic carbon dioxide separation step, which comprises at least one carbon dioxide compression and one carbon dioxide condensation step, to obtain the carbon dioxide product stream and the residual gas stream.

9. The process according to claim 8, wherein in the cryogenic carbon dioxide separation step, a stream of non-condensable gas components is obtained, which is subjected to a membrane based hydrogen separation step, whereby the residual gas stream and a hydrogen-rich stream are obtained.

10. The process according to claim 9, wherein the hydrogen-rich stream is supplied to the second synthesis gas stream obtained according to process step (c).

11. The process according to any of claims 1 to 7, wherein in the purification step (d), the second synthesis gas stream is subjected to a solvent based carbon dioxide absorption and subsequent desorption step, whereby the carbon dioxide product stream and a carbon dioxide depleted second synthesis gas stream are obtained, and wherein the carbon dioxide depleted synthesis gas stream is subjected to the pressure swing adsorption (PSA) step, whereby the hydrogen product stream and the residual gas stream are obtained.

12. The process according to any of the preceding claims, further comprising measuring the partial flow rate of the inert gas component in the hydrogen product stream by means of an analyser, and based on said measured partial flow rate of the inert gas component, adjusting a phase time of the pressure swing adsorption (PSA) step to adapt the concentration of the inert gas component in the hydrogen product stream.

13. The process according to any of the preceding claims, further comprising measuring the partial flow rate of the inert gas component in the hydrogen product stream by means of an analyser, and based on said measured partial flow rate, adjusting the flow rate of the residual gas stream supplied to a fired heater, and optionally adjusting a flow rate of the hydrogen product gas stream supplied to said fired heater.

14. The process according to claim 12 or 13, whereby additionally the partial flow rate of a carbon containing gas component in the hydrogen product stream is measured by means of the analyser, in particular the partial flow rate of at least one element from the group comprising
- carbon monoxide,
- carbon dioxide and
- methane
is measured by means of the analyser.

15. The process according to any of the preceding claims, wherein the concentration of the inert gas component in the hydrogen product steam is at least 2000 ppm, preferably wherein the concentration of the sum of nitrogen and argon in the hydrogen product stream is at least 2000 ppm.
